# EUROPEAN PATENT APPLICATION

(11) **EP 3 875 825 A1**
(43) Date of publication of application: **08.09.2021**
(21) Application number: 20160306.5
(22) Date of filing: 02.03.2020
(51) Int. Cl.: F16L 37/088, B33Y 80/00, F16L 37/14, F04D 13/08

(54) **CONNECTOR FOR A PUMP**

(71) Applicant: HUSQVARNA AB, 561 82 Huskvarna (SE)
(72) Inventor: Baykara, Yunus, 73732 Esslingen (DE); Drößler, Christian, 89173 Lonsee (DE); Demmelmaier, Tobias, 89312 Günzburg (DE)
(74) Representative: Finkele, Rolf

(57) **Abstract**

A connector **(210)** for a pump **(100).** The connector **(210)** includes a first connector portion **(214)** and a second connector portion **(216).** A first end **(222)** of the second connector portion **(216)** is coupled to a second end **(220)** of the first connector portion **(214).** A connection mechanism couples the second end **(220)** of the first connector portion **(214)** and the first end **(222)** of the second connector portion **(216).** The connector **(210)** is characterized in that the connection mechanism is movable between a closed position and an open position based on actuation of a resilient portion **(226).** Further, the second connector portion **(216)** remains coupled with the first connector portion **(214)** in the closed position of the connection mechanism. Moreover, the second connector portion **(216)** can be uncoupled with the first connector portion **(214)** in the open position of the connection mechanism.

## Description

### TECHNICAL FIELD

The present disclosure relates to a connector for a pump. More specifically, the present disclosure relates to a connector for a pump which provides simple and convenient coupling or adjustment of a hose attached therewith.

### BACKGROUND

A pump is a device that allows transport of fluids such as liquids or gases, or sometimes slurries, by mechanical actions. For example, a submersible pump is a device which has a hermetically sealed motor close-coupled to a pump body. The submersible pump may be submerged in a fluid to be pumped. Generally, the pumps are used to pump water from wells, or to filter aquariums, ponds, or may be used in car industries or energy industries for desired purposes.

A connector is a device which connects or links two or more parts all together. In case of the pumps, a hose connector finds application as a hose coupling device. The hose connector may be provided at an end of the hose. The hose connector may connect the hose to another hose or with a tap or an appliance, such as an irrigation sprinkler, a pump, and the like.

However, there may be instances where coupling of a hose with a pump may become a troublesome process. The assembly or disassembly of the hose with the pump may require undesirable efforts. Further, the assembly or disassembly of the hose with the pump may require unreasonable time. Moreover, many technical issues may occur during assembly or disassembly of the hose with the pump.

The Chinese utility model CN 208 950 894 U shows a connector that connects a pump to a hose. The connector consists of two removable parts, as also known by many other conventional pumps. The first part is connected to the outlet of the pump and the other part is associated with the hose to be coupled to the pump. The removable connection between these two parts is realized as a conventional screwing connection. Removing the two connecting parts is often a tedious task that also could be troublesome.

Thus, there is a need for an improved connector for a pump which allows safe, convenient and trouble-free coupling of a hose with the pump.

### SUMMARY

In view of the above, it is an objective of the present invention to solve or at least reduce the drawbacks discussed above. The objective is at least partially achieved by a connector for a pump. The pump includes a body. The body includes an inlet and an outlet. The connector further includes a first connector portion and a second connector portion. Further, the first connector portion includes a first end and a second end. The first end of the first connector portion is coupled to the outlet of the pump. Moreover, the second connector portion includes a first end and a second end. The first end of the second connector portion is adapted to be coupled to the second end of the first connector portion and the second end of the second connector portion is adapted to be coupled to a hose. Further, the second end of the second connector portion is angularly oriented relative to the first end of the first connector portion. The connector further includes a connection mechanism. The connection mechanism couples the second end of the first connector portion and the first end of the second connector portion. The connector is characterized in that the connection mechanism is movable between a closed position and an open position based on actuation of a resilient portion. Further, the second connector portion remains coupled with the first connector portion in the closed position of the connection mechanism. The second connector portion can be uncoupled with the first connector portion in the open position of the connection mechanism. Thus, the present disclosure provides a simple, efficient, and convenient coupling and uncoupling of the hose and the second connector portion coupled therewith, with the pump. Even in case that the hose is stiff or that it is a problem with torsion forces acting onto it this type of connector can be used and is superior to the connections known from the state of the art.

According to an embodiment of the present invention, the resilient portion of the connection mechanism includes a first protrusion and a second protrusion. The first protrusion is coupled to a first annular portion. Further, the first annular portion at least partially encloses the first connector portion. The second protrusion is coupled to a second annular portion. Moreover, the second annular portion at least partially encloses the second connector portion. This may provide an efficient and optimal engagement of the first connector portion and the second connector portion.

According to an embodiment of the present invention, the first protrusion and the second protrusion are movable relative to each other and where in case the first protrusion and the second protrusion move towards each other the connection mechanism changes from the closed position to the open position. This may lead to less efforts being involved in assembly and disassembly of the first connector portion with the second connector portion.

According to an embodiment of the present invention, a stop pin is located between the first protrusion and the second protrusion, preferably on the resilient portion itself, and is formed to interfere with and thus limit the movement of the first protrusion and/or the second protrusion. By this the stop pin helps to ensure that with the relative movement of the first protrusion and the second protrusion towards each other both of the protrusions are moved simultaneously.

According to an embodiment of the present invention, wherein the first annular portion and the second annular portion include lockers. The lockers allow desired engagement of the resilient member with the first connector portion.

According to an embodiment of the present invention the first annular portion and the second annular portion are formed integrally. In this case the resilient portion of the connector forms a single element that eases handling, in particular during assembly.

According to an embodiment of the present invention, wherein the resilient portion is linked via a pin to the first connector portion. The pin holds the resilient portion in place in respect to the first connector portion in the area of the pin even in case of movement of the first protrusion and/or the second protrusion.

According to an embodiment of the present invention, the first annular portion and the second annular portion include complementary structural configurations. This may provide desired engagement of the first annular portion and the second annular portion.

According to an embodiment of the present invention, the resilient portion is manufactured by three-dimensional printing. Use of three-dimensional printing (alternatively, 3D printing) may provide versatility of using different materials along with lower lead-time in manufacturing and design of the resilient portion.

According to an embodiment of the present invention, the second connector portion includes legs. The legs may engage with the complementary geometry of the second end of the first connector portion to provide a firm grip.

According to an embodiment of the present invention, the first end of the second connector portion and the second end of the first connector portion have complementary geometries for coupling. This may provide better and water-tight coupling of the first connector portion and the second connector portion.

According to an embodiment of the present invention, the connector is made up of a material selected from one or more of a steel, brass, stainless steel, aluminum or plastic. The nature of material may provide desired characteristic features to the connector.

According to an embodiment of the present invention, the resilient portion is a clip. This may require less efforts by a common user to couple the second connector portion with the first connector portion.

According to an embodiment of the present invention, the first end of the second connector portion and the second end of the first connector portion include one or more seals. The one or more seals may supplement the water-tight connection between the first connector portion and the second connector portion, among other functional benefits.

According to an embodiment of the present invention, the foot for a pump having a pump housing may be manufactured using a three-dimensional (3-D) printing process. A user of a pump having an according foot may be provided with a data file having pre-stored instructions to print the foot using a three-dimensional (3-D) printer. In order to do so, the foot may be presented in digital format. Use of three-dimensional printing (alternatively, 3D printing) may provide versatility of using different materials along with lower lead-time in manufacturing and design of the foot.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a pump having a conventional connector, in accordance with an aspect of the present disclosure;
**FIG. 2** shows the pump having a connector with a resilient portion, in accordance with an aspect of the present disclosure;
**FIG. 3** shows a first connector portion and a second connector portion in a disassembled state, in accordance with an aspect of the present disclosure;
**FIG. 4** shows a sectional view of the first connector portion and the second connector portion in an assembled state, in accordance with an aspect of the present disclosure; and
**FIG. 5** shows a cross-sectional view of the first connector portion with the resilient portion along an X-X axis of **FIG. 4**, in accordance with another aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

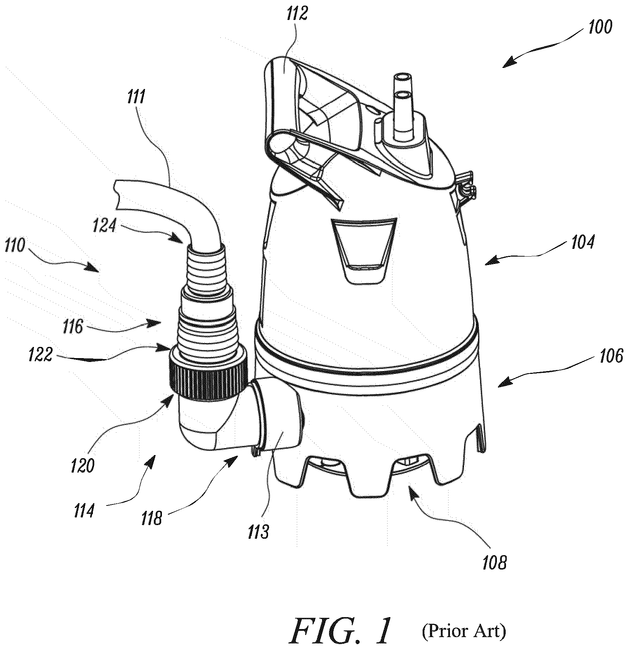

**FIG. 1** illustrates a pump **100** having a conventional connector **110**. The pump **100** may be a mechanical device which pumps fluids such as liquids, gases, or sometimes slurries. The pump **100** of the present disclosure may be a submergible pump which may be used indoors or outdoors according to applicational needs of a common user. The pump **100** includes a body **104**. The body **104** has an inlet **108** and an outlet **113**. The body **104** further includes a base **106.** The inlet **108** is present at the base **106** of the pump **100.** The inlet **108** may allow a fluid to enter the pump **100**. Further, the outlet **113** may be provided near to the base **106** of the pump **100**. The outlet **113** may discharge the pumped fluid. The discharged fluid may be used for different applications such as irrigation, washing etc.

Moreover, the pump **100** has a handle **112**. The handle **112** may be used to lift or displace the pump **100**. The conventional connector **110** includes a first connector portion **114** and a second connector portion **116**. The first connector portion **114** has a first end **118** of the first connector portion **114** and a second end **120** of the first connector portion **114**. The first end **118** of the first connector portion **114** is coupled with the outlet **113** of the pump **100**. The second connector portion **116** includes a first end **122** of the second connector portion **116** and a second end **124** of the second connector portion **116**. The second end **124** of the second connector portion **116** couples to a hose **111**. Further, the first end **122** of the second connector portion **116** is removably screwed with the second end **120** of the first connector portion **114**.

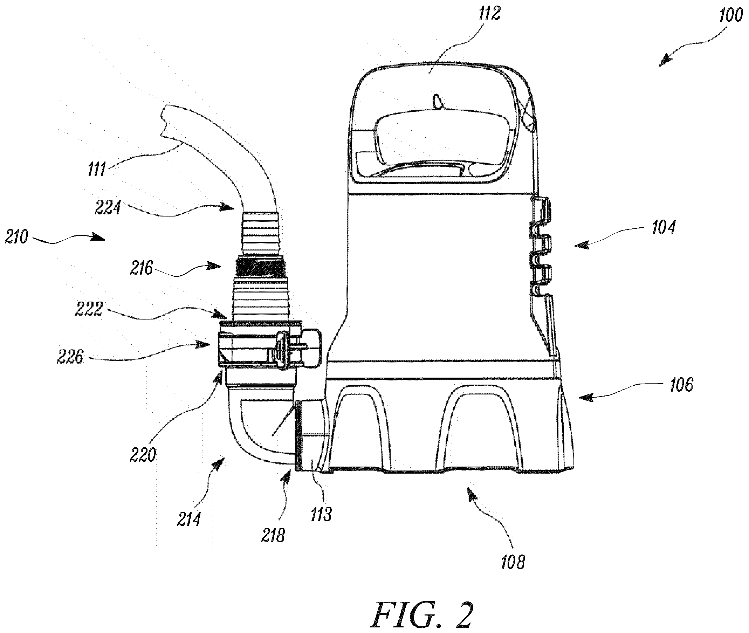

**FIG. 2** illustrates the pump **100** having a connector **210**.. The pump **100** of the present disclosure makes use of the connector **210** to connect two connector portions associated with the pump **100**. More particularly, the connector **210** of the pump **100** includes a first connector portion **214** and a second connector portion **216**. The first connector portion **214** includes a first end **218** and a second end **220**. Further, the first end **218** of the first connector portion **214** is coupled to the outlet **113** of the pump **100**. The second connector portion **216** includes a first end **222** and a second end **224**. The second end **224** of the second connector portion **216** is coupled to the hose **111**. Further, the first end **222** of the second connector portion **216** is coupled to the second end **220** of the first connector portion **214**.

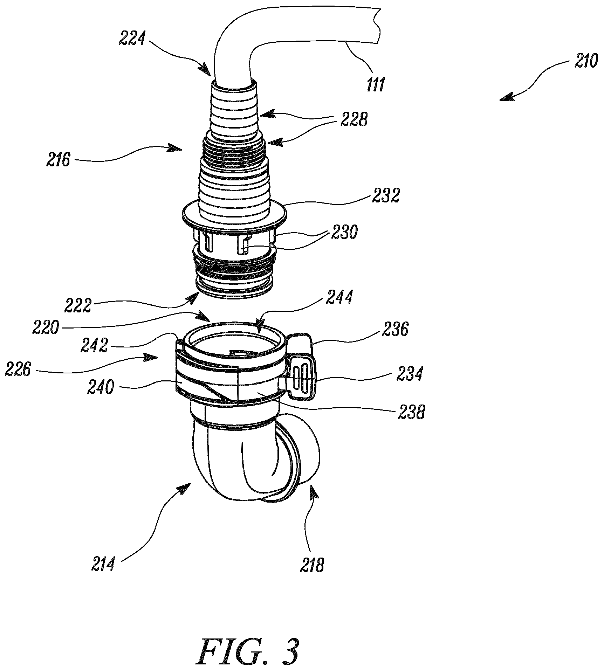

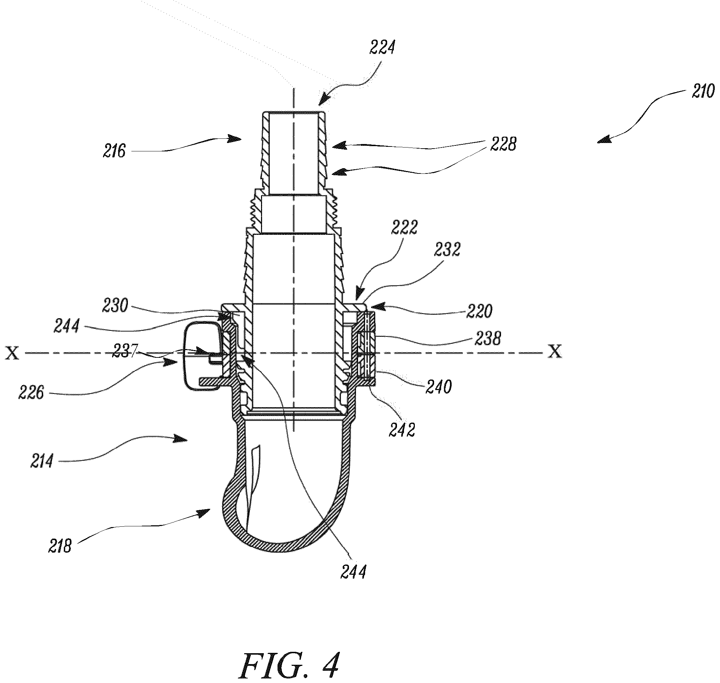

The second end **224** of the second connector portion **216** is angularly oriented relative to the first end **218** of the first connector portion **214**. The connector **210** further includes a resilient portion **226**. The resilient portion **226** couples the first connector portion **214** with the second connector portion **216**. A connection mechanism couples the second end **220** of the first connector portion **214** and the first end **222** of the second connector portion **216**. The connection mechanism is movable between a closed position and an open position (shown in **FIGS. 3** and **4**) based on actuation of the resilient portion **226**.

In some embodiments, the resilient portion **226** is made up of a material selected from one or more of a steel, brass, stainless steel, aluminum or plastic. Nature of the material is chosen as per the requirements of the common user. The desired nature of the material may provide the resilient portion **226** with certain characteristic features such as flexibility, elasticity, heat or vibrational resistant properties.

In some embodiments, the resilient portion **226** may be manufactured using any process, such as casting, molding, forging, fabrication, and the like. In yet other embodiments, the resilient portion **226** may be manufactured by three-dimensional printing (also known as additive manufacturing or 3D printing). Use of three-dimensional printing (alternatively, 3D printing) provides versatility of using different materials along with low lead-time in manufacturing and design of the resilient portion **226**.

**FIG. 3** illustrates the connection between the first connector portion **214** and the second connector portion **216** in a disassembled state. The second connector portion **216** is uncoupled with the first connector portion **214** in the open position of the connection mechanism. In the depicted embodiment the second connector portion **216** has a stepped configuration **228**. The stepped configuration **228** of the second connector portion **216** allows coupling of the hose **111** with different steps of the stepped configuration **228**. The second connector portion **216** includes legs **230**. The legs **230** get engaged with a complementary geometry **244** of the second end **220** of the first connector portion **214**. The legs **230** are attached with a flange **232** of the second connector portion **216**. The flange **232** may provide stability and desired coupling to the second connector portion **216** while getting assembled with the first connector portion **214**.

In some embodiments, the stepped configuration **228** may provide coupling of different hoses to the same second connector portion **216**. Hoses of different diameters or the like dimensions may be adjusted at different steps of the second connector portion **216.** Alternatively, or additionally, a threaded structure may be provided with the second end **224** of the second connector portion **216** to get coupled with the hose **111**.

Further, the resilient portion **226** is provided close to the second end **220** of the first connector portion **214**. The resilient portion **226** includes a first protrusion **234**. Further, the resilient portion **226** includes a second protrusion **236**. Moreover, the first protrusion **234** is coupled to a first annular portion **238**. The second protrusion **236** is coupled to a second annular portion **240**.

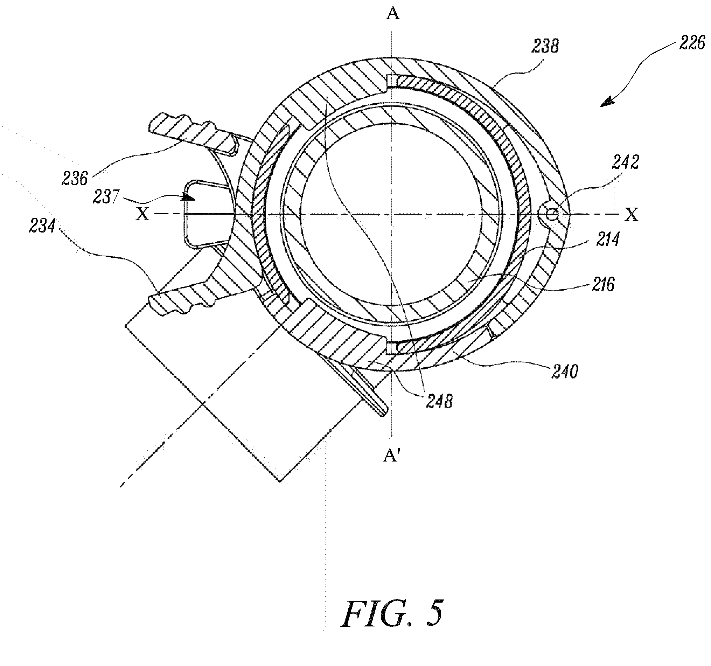

A pin **242** and associated slot(s) (not shown) is provided for engagement with both the resilient portion **226** and the first connector portion **214,** preferably around the second end **220** of the first connector portion **214**. The pin **242** engages the first annular portion **238** and the second annular portion **240**, as illustrated in **FIGS. 4****,** **5**. The pin **242** may hold the first annular portion **238** and the second annular portion **240** together and prevent any inadvertent movement thereof. The pin **242** holds the resilient portion **226** in place in respect to the first connector portion in the area of the pin **242** even in case of movement of the first protrusion **234** and/or the second protrusion **236**.

In some embodiments, a snap connection may be present to hold the first annular portion **238** and the second annular portion **240** together. In yet another embodiment, a screw or any other fastener as known or used in the art may be provided. Alternatively, or additionally, the first annular portion **238** may have saw teeth. The saw teeth may get engaged with complementary saw teeth of the second annular portion **240.** According to an embodiment of the present invention the first annular portion **238** and the second annular portion **240** are formed integrally.

**FIG. 4** illustrates the first connector portion **214** and the second connector portion **216** in an assembled state. The second connector portion **216** remains coupled with the first connector portion **214** in the closed position of the connection mechanism. The first end **222** of the second connector portion **216** is engaged with the second end **220** of the first connector portion **214**. The flange **232** may help the second connector portion **216** to have desired engagement and stability with the first connector portion **214**. The legs **230** of the second connector portion **216** gets engaged with the complementary geometry **244** of the second end **220** of the first connector portion **214**. The complementary geometry **244** may also provide a water-tight connection. The legs **230** of the second connector portion **216** and the complementary geometry **244** of the first connector portion **214** get engaged to have desired locking between the first connector portion **214** and the second connector portion **216.**

Preferably there is a sealing (not shown) placed between the first connector portion **214** and the second connector portion **216**, which for example could be an O-ring sealing. which further. This sealing supplement the water tight connection between the second end **220** of the first connector portion **214** and the first end **222** of the second connector portion **216**.

In some embodiments, the first end **222** of the second connector portion **216** may have some protrusions which may get engaged with complimentary grooves provided with the second end **220** of the first connector portion **214** or vice-a-versa.

In some embodiments, O-rings or gaskets may be used to connect the second end **220** of the first connector portion **214** and the first end **222** of the second connector portion **216**.

The first end **222** of the second connector portion **216** and the second end **220** of the first connector portion **214** constitute the water-tight connection. The water-tight connection may be attained by attaching O-rings (not shown). The O-rings may supplement sealing between the first connector portion **214** and the second connector portion **216** to provide the water-tight connection. In some embodiments, the water-tight connection may be obtained by using gaskets. Alternatively, or additionally, water repellent coatings may be used to obtain water-tight connection.**FIG. 5** illustrates a cross-sectional view of the first connector portion **214** with the resilient portion **226** along an **X-X** axis of **FIG. 4**. The connection mechanism is movable between the closed position and the open position based on actuation of the resilient portion **226**. The first protrusion **234** and the second protrusion **236** are pressed together to change the connection mechanism from the closed position to the open position. In the depicted embodiment a stop pin **237** is located between the first protrusion **234** and the second protrusion **236**, preferably on the resilient portion **226** itself, and is formed to interfere with and thus limit the movement of the first protrusion **234** and/or the second protrusion **236**. By this the stop pin **237** helps to ensure that with the relative movement of the first protrusion **234** and the second protrusion **236** towards each other both of the protrusions are moved simultaneously.

As illustrated in **FIG. 5** the first protrusion **234** is provided with to the first annular portion **238**. The second protrusion **236** is provided with the second annular portion **240**. The first annular portion **238** and the second annular portion **240** at least partially encloses the first connector portion **214**. In some embodiments, any or both of the first protrusion **234** and the second protrusion **236** are pressed together to change the connection mechanism from the closed position to the open position. This may require less efforts to assemble or disassemble the first connector portion **214** with the second connector portion **216**, based on disengagement or loosening of the resilient portion **226** with the first connector portion **214**. Preferably the stop pin **237** limits the movement of the first protrusion **234** and the second protrusion **236**, resulting with most cases in a movement of both when force is applied via the fingers of a user on both of them.

The first annular portion **238** and the second annular portion **240** include lockers **248**. The lockers **248** allow desired engagement of the resilient portion **226** with the first connector portion **214**. Any or both of the first connector portion **214** and the second connector portion **216** may be provided with recesses for engagement with the lockers **248** of the first annular portion **238** and the second annular portion **240**, in some embodiments of the present disclosure.

As illustrated in **FIG. 5**, the first annular portion **238** and the second annular portion **240** expands along an **A-A'** axis. This configurational change along the **A-A'** axis may allow better insertion/engagement of the second end **220** of the first connector portion **214** and the first end **222** of the second connector portion **216**.

In this embodiment, the resilient portion **226** may be a clip. This may require less efforts by the common user to couple or uncouple the second connector portion **216** with the first connector portion **214**, based on a simple, convenient clasping action of the resilient portion **226**, among other functional benefits.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **110**: Conventional Connector
- **100**: Pump
- **104**: Body
- **106**: Base
- **108**: Inlet
- **113**: Outlet
- **111**: Hose
- **112**: Handle
- **114**: First connector portion
- **116**: Second connector portion
- **118**: First end
- **120**: Second end
- **122**: First end
- **124**: Second end
- **210**: Connector
- **214**: First connector portion
- **216**: Second connector portion
- **218**: First end
- **220**: Second end
- **222**: First end
- **224**: Second end
- **226**: Resilient Portion
- **228**: Stepped Configuration
- **230**: Legs
- **232**: Flange
- **234**: First Protrusion
- **236**: Second Protrusion
- **237**: **Stop pin**
- **238**: First annular portion
- **240**: Second annular portion
- **242**: Pin
- **244**: Complementary Geometry
- **248**: Lockers
- **X-X**: Axis
- **A-A'**: Axis

## Claims

1. A connector (**210**) for a pump (**100**) defining a body (**104**) having an inlet (**108**) and an outlet (**113**),
the connector (**210**) comprising:
a first connector portion (**214**) having a first end (**218**) and a second end (**220**), wherein the first end (**218**) of the first connector portion (**214**) is adapted to be coupled to the outlet (**113**) of the pump (**100**);
a second connector portion (**216**) having a first end (**222**) and a second end (**224**), wherein the first end (**222**) of the second connector portion (**216**) is adapted to be coupled to the second end (**220**) of the first connector portion (**214**) and the second end (**224**) of the second connector portion (**216**) is adapted to be coupled to a hose (**111**);
the second end (**224**) of the second connector portion (**216**) is angularly oriented relative to the first end (**218**) of the first connector portion (**214**);
a connection mechanism couples the second end (**220**) of the first connector portion (**214**) and the first end (**222**) of the second connector portion (**216**); and
**characterized in that:**
the connection mechanism is movable between a closed position and an open position based on actuation of a resilient portion (**226**), wherein:
the second connector portion (**216**) remains coupled with the first connector portion (**214**) in the closed position of the connection mechanism; and
the second connector portion (**216**) can be uncoupled with the first connector portion (**214**) in the open position of the connection mechanism.

2. The connector (**210**) of claim 1, wherein the resilient portion (**226**) of the connection mechanism comprises:
a first protrusion (**234**) coupled to a first annular portion (**238**), wherein the first annular portion (**238**) at least partially encloses the first connector portion (**214**); and
a second protrusion (**236**) coupled to a second annular portion (**240**), wherein the second annular portion (**240**) at least partially encloses the second connector portion (**216**).

3. The connector (**210**) of claim 2, wherein the first protrusion (**234**) and the second protrusion (**236**) are movable relative to each other,
and where in case of the first protrusion (**234**) and the second protrusion (**236**) move towards each other the connection mechanism changes from the closed position to the open position.

4. The connector (**210**) of claim 2 or 3, wherein the first annular portion (**238**) and the second annular portion (**240**) include lockers (**248**).

5. The connector (**210**) of any of claims 2 to 4, wherein the first annular portion (**238**) and the second annular portion (**240**) are formed integrally.

6. The connector (**210**) of any of claims 2 to 5, wherein a stop pin (**237**) is located, preferably on the resilient portion (**226**), between the first protrusion (**234**) and the second protrusion (**236**) and formed to interfere with and thus limit the movement of the first protrusion (**234**) and/or the second protrusion (**236**).

7. The connector (**210**) of any of the preceding claims, wherein the resilient portion (**226**) is linked by a pin (**242**) to the first connector portion (**214**).

8. The connector (**210**) of any of claims 1 to 8, wherein the second connector portion (**216**) includes legs (**230**).

9. The connector (**210**) of any of claims 1 to 8, the first end (**222**) of the second connector portion (**216**) and the second end (**220**) of the first connector portion (**214**) have complementary geometries for desired coupling therebetween.

10. The connector (**210**) of any of claims 1 to 10, wherein the resilient portion (**226**) is a clip.

11. The connector (**210**) of any of claims 1 to 11, the first end (**222**) of the second connector portion (**216**) and the second end (**220**) of the first connector portion (**214**) include one or more seals.

12. A resilient portion (**226**) for a connector (**210**) for a pump (**100**) of any of the claims 1-11.

13. The resilient portion (**226**) of claim 12, **characterized in that**, resilient portion (**226**) is manufactured using a three-dimensional (3-D) printing process.

14. The resilient portion (**226**) of claim 12 or 13, **characterized in that**, a user of the resilient portion (**226**) is provided with a data file having pre-stored instructions to print the resilient portion (**226**) using a three-dimensional (3-D) printer.

15. The resilient portion (**226**) of any one of claims 12 to 14, wherein the resilient portion (**226**) is presented in digital format.
